# EUROPÄISCHE PATENTANMELDUNG

(11) **EP 3 967 481 A1**
(43) Veröffentlichungstag der Anmeldung: **16.03.2022**
(21) Anmeldenummer: 21188394.7
(22) Anmeldetag: 29.07.2021
(51) Int. Cl.: B29D 22/02

(54) **VERFAHREN UND VORRICHTUNG ZUR HERSTELLUNG EINES LUFTFEDERBALGS**

(30) Priorität: 03.09.2020 DE 102020211103
(71) Anmelder: ContiTech Luftfedersysteme GmbH, 30165 Hannover (DE)
(72) Erfinder: Kranz, Harald, 30419 Hannover (DE)
(74) Vertreter: Continental Corporation

(57) **Zusammenfassung**

Die Erfindung betrifft ein Verfahren sowie eine Vorrichtung zur Herstellung eines Luftfederbalges aus einem elastomeren Material, dessen Wandung mindestens eine Festigkeitsträgerlage aufweist und der mit einem elektronischen Bauteil versehen ist, wobei die Herstellung in folgenden Schritten erfolgt:
a) Aufbau eines Balgrohlings aus einer oder mehreren Lagen eines unvulkanisierten Elastomers und einer oder mehreren Festigkeitsträgerlagen,
b) Einbringen des Balgrohlings in eine den Balgrohling mindestens von einer Seite begrenzenden und formenden Vulkanisationsform, in deren Wandung eine zum Balgrohling geöffnete Konkavität / Ausnehmung zur Aufnahme des elektronischen Bauteils mit samt einer das Bauteil umgebenden Ummantelung aus Elastomer ausgebildet ist.
c) wobei vor dem Einbringen des Balgrohlings das elektronische Bauteil mit einem Elastomer ummantelt und innerhalb der Konkavität / Ausnehmung positioniert wird und nach dem Einbringen des Balgrohlings letzterer zusammen mit dem das elektronische Bauteil ummantelnden Elastomer vulkanisiert wird,
wobei danach der Balg (2) aus der Vulkanisationsform entnommen wird.

## Beschreibung

Die Erfindung betrifft ein Verfahren sowie eine Vorrichtung zur Herstellung eines Luftfederbalges aus einem elastomeren Material, dessen Wandung mindestens eine Festigkeitsträgerlage aufweist und der mit einem elektronischen Bauteil, vorzugsweise einem RFID-Transponder versehen ist. Ebenso wird eine Luftfeder offenbart, die einen erfindungsgemäß hergestellten Luftfederbalg beinhaltet.

### Stand der Technik

Luftfedern sowie zu deren Herstellung gebräuchliche Verfahren sind aus dem Stand der Technik bekannt. Luftfedern finden in verschiedensten Kraftfahrzeug- und Industrieanwendungen ihren Einsatz, wenn es um die Entkoppelung von Schwingungen verschiedener Bauteile zueinander geht. Üblicherweise bestehen Luftfedern im Wesentlichen aus einer an der unteren Wulst eines elastomeren Luftfederbalges angebundenen Felge sowie einer an dessen oberer Wulst angebundenen Oberplatte. Felge und Oberplatte können beispielhaft aus Metall oder Kunststoff gefertigt sein. Über Schnittstellen kann dem Balg Druckluft zugeführt werden, wodurch die schwingungsisolierende Wirkung zwischen den jeweils an Felge und Oberplatte angebundenen Maschinenbauteilen ermöglicht wird.

Da Luftfedern einem Verschleiß unterliegen, ist deren Ersatz mitunter erforderlich, weshalb die Identifikation der Luftfeder für den Endanwender, beispielsweise zur Bestellung der korrekten Ersatzteile, von großer Bedeutung ist. Ebenfalls kann durch die Vergabe herstellerspezifischer Identifikationsnummern ein Schutzmechanismus vor Plagiaten mit minderer Qualität geschaffen werden. Im Stand der Technik sind Lösungen offenbart, bei denen der Verbau von Identifikationssystemen in Form von Radio-Frequency-Identification-Transponder (RFID-Transponder) in der Luftfeder beschrieben ist.

Aus der DE 10 2008 048 961 A1 ist eine Identifikationseinrichtung für eine Luftfeder mit einem in die Elastomermatrix des Luftfederbalges eingebetteten RFID-Transponder bekannt, welcher über ein elektromagnetisches Feld eines Lesegerätes Energie zur Übertragung von Informationen zwischen RFID-Transponder und Lesegerät bezieht.

Weiterhin ist ein Verfahren zur Herstellung eines solchen Balges offenbart, in welchem der RFID-Transponder in das vollständig unvulkanisierte Elastomermaterial des Balges eingebettet und gemeinsam mit diesem vulkanisiert wird. Die hier beschriebene Lösung hat als Nachteil zur Folge, dass der RFID-Transponder in das Bauvolumen des Luftfederbalges integriert ist, sodass dem ursprünglich konzipierten Luftfederbalg Material in dem Volumen des RFID-Transponders entnommen ist, was zu einem frühzeitigen Bauteilversagen führen kann.

### Aufgabe

Der Erfindung liegt die Aufgabe zugrunde, ein Verfahren sowie eine Vorrichtung zur Herstellung eines Luftfederbalges aus einem elastomeren Material, dessen Wandung mindestens eine Festigkeitsträgerlage aufweist und der mit einem elektronischen Bauteil, vorzugsweise einem RFID-Transponder versehen ist, bereitzustellen, ohne die dynamischen Eigenschaften des Elastomerproduktes zu beeinträchtigtigen. Ebenso besteht die Aufgabe der beschriebenen Vorrichtung und des Verfahrens darin, die Herstellung des Luftfederbalges mittels geläufiger Verfahrensschritte durchzuführen, um eine kostenneutrale Integration von elektronischen Bauteilen zu ermöglichen.

### Lösung der Aufgabe

Die Lösung dieser Aufgabe ergibt sich durch ein Verfahren aus den Merkmalen des Anspruches 1, während vorteilhafte Ausgestaltungen und Weiterbildungen des Verfahrens den zugeordneten Unteransprüchen entnehmbar sind. Der Anspruch 4 offenbart eine Vorrichtung zur Durchführung des erfindungsgemäßen Verfahrens. Ein entsprechendes Erzeugnis in Form einer Luftfeder, die einen mit dem erfindungsgemäßen Verfahren erzeugten Luftfederbalg enthält, ist in Anspruch 5 beansprucht.

### Vorteile der Erfindung

Das in dem Hauptanspruch offenbarte erfindungsgemäße Verfahren hat den Vorteil, dass die dynamischen Eigenschaften des Produktes durch den RFID-Transponder nicht beeinflusst werden und ein entsprechender Einfluss auf die Lebensdauer des Produktes vermieden wird. Insbesondere der Verbau von großflächigen elektronischen Bauteilen, wie zum Beispiel bei einem RFID-Transponder durch Antennenstrukturen bedingt, erschwert die Integration in Elastomerprodukte unter der Voraussetzung des Erfüllens von Lebensdaueranforderungen.

Die Herstellung des Balges erfolgt gemäß bekannter Fertigungsverfahren, wobei ein Balgrohling schichtweise aus verschiedenen Lagen von unvulkanisiertem Elastomer und Festigkeitsträgern aufgebaut wird. Der Herstellungsschritt, bei dem die verschiedenen Komponenten um eine zylindrische Form gelegt werden, wird auch Konfektion genannt. Je nach Anforderung an die Eigenschaften des Luftfederbalges kann dieser aus einer oder mehreren Elastomer- und Festigkeitsträgerlagen bestehen. Im folgenden Prozessschritt, der Vulkanisation, wird das mit einem vorzugsweise unvulkanisierten Elastomer ummantelte elektronische Bauteil gemeinsam mit dem Balgrohling stoffschlüssig verbunden, wobei das Elastomer des Balgrohlings und das der Ummantelung des elektronischen Bauteils miteinander vernetzen. Um die Handhabung zu verbessern und die Prozesszeit zu verkürzen kann das ummantelnde Elastomer alternativ auch bereits vorvulkanisiert sein. Das ummantelte elektronische Bauteil wird hierzu erfindungsgemäß in einer zum Balgrohling geöffneten konkaven Ausnehmung der Vulkanisationsform positioniert, woraufhin der Balgrohling in die Vulkanisationsform eingelegt wird, die diesen von mindestens einer Seite begrenzt und für die Formgebung während der Vulkanisation verantwortlich ist. Durch die Parameter Druck, Temperatur und Zeit vernetzt das Elastomer während des Vulkanisationsprozesses, wodurch das Elastomer seine elastischen Eigenschaften erhält. Nach Abschluss der Vulkanisation kann der vulkanisierte Balg in einer Einheit mit dem elektronischen Bauteil der Vulkanisationsform entnommen werden. In Abhängigkeit der Ausführungsform kann die Vulkanisationsform sowohl an der Innen- oder Außenseite des Luftfederbalges anliegen als diesen auch beidseitig umschließen. Das elektronische Bauteil, zum Beispiel ein RFID-Transponder, kann sowohl auf der Innen- als auch auf der Außenseite des Balges angeordnet sein, was eine sowohl prozesstechnische als auch konstruktive Flexibilität gewährt. Die Positionierung an der Balginnenseite hat den Vorteil, dass der Transponder zusätzlich durch die Elastomer- und Festigkeitsträgerlagen des Balges vor äußeren Einflüssen geschützt wird und den optischen Gesamteindruck der Luftfeder von außen nicht beeinträchtigt. Hingegen kann die visuelle Identifikation des Transponders gewünscht sein, um ein Lesegerät für die Energieversorgung zur Datenübermittlung in dessen Nähe zu positionieren, wobei sich die Positionierung des RFID-Transponders an der Außenseite des Balges als vorteilhaft erweist. Bei einer Positionierung des elektronischen Bauteils bzw. Transponders an der Außenseite des Balges ist dieser als geometrischer Hügel zu erkennen. Eine weitere Ausführungsform des Verfahrens beschreibt, dass für die Ummantelung des elektronischen Bauteils dasselbe unvulkanisierte Elastomer genutzt wird, wie für die Lagen des Balgrohlings. Dies ist besonders vorteilhaft, da durch die identischen Materialeigenschaften von Luftfederbalg und Umhüllung eine verlässliche, stoffschlüssige Anbindung der Umhüllung an den Luftfederbalg gewährleistet wird, über welche der RFID-Transponder an diesem fixiert ist. Eine vorteilhafte Weiterbildung des Verfahrens besteht darin, dass der Balgrohling während der Vulkanisation in einer ihn von außen begrenzenden Vulkanisationsform, die eine Konkavität oder Ausnehmung zur Aufnahme des ummantelten elektronischen Bauteils aufweist, eingebracht ist und dabei von innen durch einen aufblasbaren Heizbalg aus hitzebeständigem elastomeren Material gestützt wird. Dieser Heizbalg wird während der Vulkanisation mit Heißdampf und Druck gefüllt und drückt somit den Luftfederbalgrohling von innen an die Außenform. Dies entspricht einem weit verbreiteten Verfahren zur Vulkanisation von Luftfederbälgen. Die Außenform kann in diesem Fall auf Vulkanisationstemperatur beheizbar und aus Metall gefertigt sein, was vorteilhafter Weise dazu führt, dass die Ausnehmung zur Positionierung des elektronischen Bauteils in einem Formteil vorgesehen ist, das keinem Verschleiß unterliegt und somit zu einer hohen Prozesssicherheit und Reproduzierbarkeit der Produktqualität führt. Eine erfindungsgemäße Vorrichtung zur Durchführung des Verfahrens ermöglicht auf vorteilhafte Art und Weise die wiederholgenaue Positionierung des elektronischen Bauteils am Luftfederbalg sowie dessen Vulkanisation bei gleichzeitiger Anbindung des elektronischen Bauteils in einem Verfahrensschritt. Die Vorrichtung ist als Vulkanisationsform offenbart, die den Balgrohling von außen oder innen umgibt und als ein vorzugsweise als mehrteiliger, konvex oder konkav geformter Ring ausgebildet ist, der der Kontur des vulkanisierten Balgs entspricht und der auf seiner dem Balg zugewandten Seite eine Konkavität / Ausnehmung aufweist, die dem Volumen des elektronischen Bauteils mit seiner Ummantelung entspricht. Die Konkavität / Ausnehmung mit dem Volumen des elektronischen Bauteils gewährleitet, dass das Elastomer des Balges während des Fließprozesses in der Vulkanisation nicht in freie Zonen der Konkavität / Ausnehmung fließen kann und dadurch die Geometrie des Luftfederbalges oder die Position des elektronischen Bauteils verändert. Die konkave Ausnehmung in der Vulkanisationsform, kann im Falle einer Form aus Metall als ausgefräste Tasche ausgeführt sein. Es sind allerdings auch andere formgebende Elemente, wie zum Beispiel ein an der Innenkontur des Balgrohlings anliegender, expandierfähiger, Heizbalg aus hitzebeständigem elastomerem Material denkbar, in dem eine entsprechende Ausnehmung zur Aufnahme des elektronischen Bauteils vorgesehen sein kann.

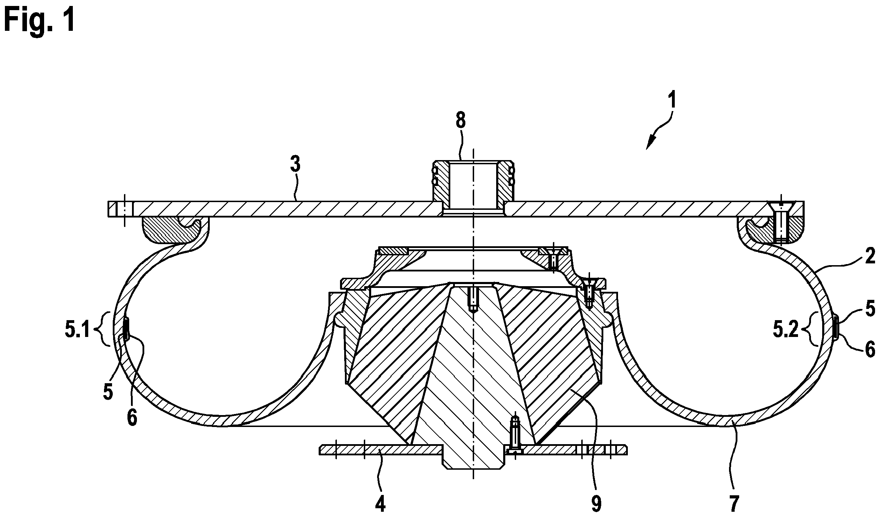

Das beschriebene Verfahren sowie die Vorrichtung zur Durchführung des Verfahrens haben als Vorteil, dass das elektronische Bauteil innerhalb der konventionellen Prozessschritte ohne Mehraufwand an einem Luftfederbalg verbaut wird, wodurch keine prozessbedingten Kostensteigerungen auf die Herstellkosten der Luftfeder anfallen. Durch die erfindungsgemäßen Ausführungen werden Lösungen offenbart, die zudem die dynamischen Eigenschaften des Luftfederbalges hinsichtlich der Lebensdauer nicht negativ beeinflussen. Ebenfalls offenbart ist eine Luftfeder mit einem erfindungsgemäß hergestellten Luftfederbalg, bei dem das elektronische Bauteil an dessen Außenseite im mittleren Höhendrittel angeordnet ist. Als Außenseite ist der innere sowie äußere Randbereich des Luftfederbalges zu verstehen. Dies bewirkt auf vorteilhafte Art und Weise, dass das elektronische Bauteil in einer belastungsfreien Zone des Luftfederbalges, frei von Rollfalten und Dehnungen, angeordnet ist. Anhand der Figur 1 wird im Folgenden ein Ausführungsbeispiel der Erfindung näher erläutert.

### Ausführungsbeispiel:

In Fig. 1 ist eine erfindungsgemäß hergestellte Halbbalgluftfeder 1 als Schnittdarstellung gezeigt. Die Luftfeder 1 weist eine Felge 4 mit einer Notfeder 9 aus Gummi als mechanischen Anschlag, eine Oberplatte 3 mit Luftzufuhr 8 und einen Balg 2 auf. Der Balg 2 ist an Felge 4 und Oberplatte 3 jeweils luftdicht befestigt. Dargestellt sind exemplarisch zwei verschiedene Positionierungen 5.1 und 5.2 des elektronischen Bauteils 5 an der Innen- oder Außenseite des Balges 2. Es sei darauf hingewiesen, dass neben diesen dargestellten Positionen beliebige andere Ausrichtungen des elektronischen Bauteils 5 gewählt werden können. Es handelt sich bei dem elektronischen Bauteil beispielsweise um einen RFID-Transponder. Der Balg 2 in Fig. 1 ist bereits als Endprodukt nach Abschluss aller Fertigungsschritte dargestellt. Ausgehend von den einzelnen Komponenten werden zu Beginn des Fertigungsprozesses Elastomer- 7 und nicht näher dargestellte Festigkeitsträgerlagen schichtweise in Form von Bahnen in der Breite und Umfangslänge der zylindrischen Form übereinander angeordnet und um diese gewickelt. Dieser Verfahrensschritt wird auch Konfektion genannt. Der konfektionierte Balgrohling wird im nächsten Prozessschritt in einer erfindungsgemäßen Vulkanisationsvorrichtung unter Einfluss der Parameter Druck, Temperatur und Zeit vulkanisiert, wobei die Elastomermischung 7 vernetzt wird und ihre typisch elastischen Eigenschaften erhält. Typischer Weise besteht die Vulkanisationsvorrichtung aus einer metallischen Außenform, die auf eine Vulkanisationstemperatur von 180°C beheizbar ist. Gestützt wird der Balgrohling in der Mitte durch einen Heizbalg aus hitzebeständigem Elastomer, der unter Beaufschlagung Druckluft expandiert und den Balgrohling an die metallische Außenform presst, sodass der Luftfederbalg 2 während des Vulkanisationsprozesses die Kontur der Außenform annimmt. Zum Verbau des RFID-Transponders an dem Luftfederbalg wird die Vulkanisationsvorrichtung derart modifiziert, dass die metallische Außenform eine Konkavität / Ausnehmung, an der dem Balgrohling zugewandten Seite, aufweist, die den RFID-Transponder und dessen elastomere Umhüllung 6 aufnimmt und genau deren Volumen entspricht. Die Anpassung der Ausnehmung an das Volumen des ummantelten Transponders verhindert einen ungewünschten Materialfluss vom Balgrohling bzw. Luftfederbalg 2 in die Ausnehmung, die ein Verrutschen des RFID-Transponders 5 zur Folge hätte. Die elastomere Umhüllung 6 gewährleistet dabei eine verlässliche, stoffschlüssige Anbindung an den Luftfederbalg 2, über welche der RFID-Transponder 5 an diesem fixiert ist. Nach Abschluss des Vulkanisationsvorgangs kann der Balg 2 samt RFID-Transponder 5 in einer Einheit der Vorrichtung entnommen werden.

### Bezugszeichenliste

- 1: Luftfeder
- 2: Luftfederbalg / Balgrohling
- 3: Oberplatte
- 4: Felge
- 5: Elektronisches Bauteil
- 6: Elastomere Ummantelung
- 7: Elastomer
- 8: Luftzufuhr
- 9: Notfeder

## Patentansprüche

1. Verfahren zur Herstellung eines Luftfederbalges (2) aus einem elastomeren Material, dessen Wandung mindestens eine Festigkeitsträgerlage aufweist und der mit einem elektronischen Bauteil (5), vorzugsweise einem RFID-Transponder versehen ist, **dadurch gekennzeichnet, dass** die Herstellung in folgenden Schritten erfolgt:
a) Aufbau eines Balgrohlings (2) aus einer oder mehreren Lagen eines unvulkanisierten Elastomers (7) und einer oder mehreren Festigkeitsträgerlagen,
b) Einbringen des Balgrohlings (2) in eine den Balgrohling mindestens von einer Seite begrenzenden und formenden Vulkanisationsform, in deren Wandung eine zum Balgrohling geöffnete Konkavität / Ausnehmung zur Aufnahme des elektronischen Bauteils (5) mit samt einer das Bauteil umgebenden Ummantelung aus Elastomer (6) ausgebildet ist, vorzugsweise einer Ummantelung aus unvulkanisiertem Elastomer,
c) wobei vor dem Einbringen des Balgrohlings (2) das elektronische Bauteil (5) mit einem Elastomer ummantelt und innerhalb der Konkavität / Ausnehmung positioniert wird und nach dem Einbringen des Balgrohlings letzterer zusammen mit dem das elektronische Bauteil ummantelnden Elastomer (6) vulkanisiert wird,
wobei nach Abschluss der Vulkanisation der vulkanisierte und mit dem elektronischen Bauteil (5) versehene Balg (2) aus der Vulkanisationsform entnommen wird.

2. Verfahren nach Anspruch 1, **dadurch gekennzeichnet, dass** zur Ummantelung (6) des elektronischen Bauteils (5) dasselbe unvulkanisierte Elastomer (7) genutzt wird wie für die Lagen des Balgrohlings.

3. Verfahren nach einem der Ansprüche 1 bis 2, wobei der Balgrohling (2) in eine den Balgrohling von außen begrenzenden und die Konkavität/Ausnehmung enthaltende Vulkanisationsform eingebracht wird und während der Vulkanisation von innen durch einen aufblasbaren Heizbalg gestützt wird.

4. Vorrichtung zur Durchführung des Verfahrens nach einem der Ansprüche 1 bis 3, **dadurch gekennzeichnet, dass** eine Vulkanisationsform vorgesehen ist, die formgebend von außen und oder von innen an den Balg (2) umgibt und als ein vorzugsweise mehrteiliger, konvex oder konkav geformter Ring ausgebildet ist, der der Kontur des vulkanisierten Balgs (2) entspricht und der auf seiner dem Balg (2) zugewandten Seite eine Konkavität / Ausnehmung aufweist, die dem Volumen des elektronischen Bauteils (5) mit seiner Ummantelung (6) entspricht.

5. Luftfeder (1) mit einem nach einem Verfahren der Ansprüche 1 bis 3 hergestellten Luftfederbalg (2), **dadurch gekennzeichnet, dass** das elektronischen Bauteil (5) an der Außenseite des Luftfederbalges (2) im mittleren Höhendrittel des Balgs angeordnet ist.
